# EUROPEAN PATENT SPECIFICATION

(11) **EP 4 547 471 B1**
(45) Date of publication and mention of the grant of the patent: **18.03.2026**
(21) Application number: 23736884.0
(22) Date of filing: 21.06.2023
(51) Int. Cl.: B29C 64/106, B22F 12/13, B22F 12/53, B22F 12/55, B29C 64/209, B29C 64/295, B33Y 10/00, B33Y 30/00, B29C 64/40

(54) **MODULAR NOZZLE FOR COAXIAL EXTRUSION**
MODULARE DÜSE FÜR KOAXIALES STRANGPRESSEN
BUSE MODULAIRE POUR EXTRUSION COAXIALE

(30) Priority: 29.06.2022 SE 2250804
(43) Date of publication of application: 07.05.2025
(73) Proprietor: CELLINK Bioprinting AB, 412 77 Göteborg (SE)
(72) Inventor: SILVA CASTELLANOS, Christian, 412 78 Göteborg (SE); MARTINEZ, Hector, 413 20 Göteborg (SE)
(74) Representative: Zacco Sweden AB
(86) International application number: PCT/SE2023/050647
(87) International publication number: WO 2024/005697

(56) References cited:
- WO-A1-2020/056517

## Description

### Field of the invention

The present invention relates to a nozzle for coaxial extrusion, and in particular to a nozzle for coaxial extrusion-based bioprinting, according to the preamble of the independent claim.

### Background

Bioengineered or bioprinted tissues and organ-like structures have been devised as the next-generation solution for the lack of organ transplant and ultimately provide functionality in regenerative therapies based on engineered tissues. However, one of the main limitations in harnessing the development of tissues relevant in size and functionality is incorporating vascular networks within these constructs. The complexity of these interconnected networks is difficult to achieve even with state-of-the-art techniques. Nevertheless, their presence in engineered tissues is vital for guaranteeing oxygen and nutrient access and successful waste disposal. Moreover, the biofabrication of patient-specific vessel-like structures suitable for use as vascular grafts could help solve the limitations faced by the currently available autologous and synthetic grafts.

Various nozzles for coextruding materials are known. For example, WO2018/106705A1 shows a coaxial 3D printing nozzle for printing polymers, wherein the nozzle can be connected to material reservoirs. CN210174208U shows a coaxial bioprinting nozzle that can be assembled and disassembled using a spring/clamp mechanism, which helps keep the coaxiality of the parts. US2016288414A1 discloses a bioprinter with a nozzle for bioprinting of a tubular structure with one material arranged around the other. US2019008998A1 and US20200164109A1 disclose various coaxial bioprinting needles. JP6601931 shows a system with a coaxial extrusion of cellular fibers. WO2020/056517A1 discloses a print head for producing hollow fiber structures.

Bioprinting of coaxial constructs, e.g. tubular constructs with multiple layers comprising different materials, requires a bioprinting nozzle capable of printing different materials in layers around a central core. One example of a nozzle capable of printing tubular constructs with multiple layers comprising different materials is shown in Silva C, Cortés-Rodriguez C, Hazur J, et al., 2020, Rational Design of a Triple-Layered Coaxial Extruder System: in silico and in vitro Evaluations Directed Toward Optimizing Cell Viability, Int J Bioprint, 6(4): 282. The nozzle shown is a triple-layered coaxial nozzle adapted to be attached to a commercial bioprinter. Even though this nozzle presents some positive results specific for bioprinting, the inventor has identifies a need for further improvement.

A common factor in all bioprinting, using biomaterial requires specialized handling, as the materials are often sensitive to changes in temperature and pressure, as well as often necessitating be processed in sterile or clean room-like conditions to avoid contamination of the material. For example, a biomaterial containing living cells must be handled such that cell viability is optimized and introduction of other living material avoided.

The inventor of the present invention has thus identified a need for an improved nozzle for extrusion based bioprinting.

### Summary

An object of the present invention is to provide a nozzle for coaxial bioprinting which provides adaptability in the number of different layers that can be simultaneously printed in a tubular structure.

A further object of the present invention is to provide a nozzle for coaxial bioprinting which provides improved centering and alignment when the nozzle is being assembled.

Another object is to provide a nozzle for coaxial bioprinting which offers temperature control of the material being used at least in the inlets of the nozzle.

Yet another object is to provide a nozzle for coaxial bioprinting which helps reduce internal pressure profiles and increase viability in 3D bioprinted constructs.

Furthermore, another object is to provide a nozzle that is easy to assemble, disassemble and clean all parts of the nozzle.

The above-mentioned objects are achieved by the present invention according to the independent claims. Preferred embodiments are set forth in the dependent claims.

In accordance with the present invention a nozzle for coaxial extrusion, comprises at least two or more modules for coaxial extrusion. Each of the modules has an inlet, an extrusion channel and an outlet. The inlet is adapted for influx or application of material to be extruded via the extrusion channel. The extrusion channel connects the inlet and the outlet. In a first module of the two or more modules the extrusion channel is centrally arranged along a longitudinal axis of the module. In the following module(s) the extrusion channel is a tubular channel adapted to be arranged around the first module's extrusion channel along the longitudinal axis of the first module. The first and following module(s) are adapted to be mounted together such that the extrusion channels are essentially coaxially and concentrically aligned along the longitudinal axis of the first module and the outlets of each module are arranged coaxially for coaxial printing of single, double or multi-layered tubular structures when the modules are connected. The two or more modules are configured as separate parts adapted to be assembled together by a user, i.e. form a common unit, to produce the nozzle. The two or more modules are further adapted to be disassembled from each other by the user and optionally reassembled with the same or different number of modules.

Furthermore, a method of bioprinting a coaxial tubular construct is disclosed comprising the steps of providing a nozzle as disclosed herein; assembling 2, 3, 4, 5, 6 or more modules to form the nozzle; connecting at least two module inlets of the nozzle to individual compartments containing material to be used in the printed construct; arranging the outlet of the connected nozzle above a printbed; and printing a tubular construct by extruding material through the nozzle.

The present disclosure will become apparent from the detailed description given below. The detailed description and specific examples disclose preferred embodiments of the disclosure by way of illustration only. Those skilled in the art understand from guidance in the detailed description that changes and modifications may be made, the scope of the invention being defined by the appended claims.

Hence, it is to be understood that the herein disclosed disclosure is not limited to the particular component parts of the device described or steps of the methods described since such device and method may vary. It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context explicitly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

Figure 1a shows a first aspect of a nozzle for coaxial extrusion-based bioprinting. Figure 1b illustrates a resulting printed construct from such a nozzle.
Figure 2a and 2b shows a further aspect of a nozzle for coaxial extrusion-based bioprinting.
Figure 3 shows a module of the nozzle of Figure 2a and 2b.
Figures 4a, 4b and 4c show various views of yet another aspect of a nozzle for coaxial extrusion-based bioprinting.
Figure 4d shows a cut-through view of another aspect of a nozzle for coaxial extrusion-based bioprinting, and Figure 4e illustrates an exploded view of the another aspect of a nozzle.
Figure 4f illustrates yet another nozzle when provided with tubing connecting to the inlets and a temperature cartridge system.
Figure 5a illustrates an exemplary configuration of a nozzle connected to a bioprinter. Figure 5b illustrates another exemplary configuration of a nozzle connected to a bioprinter.
Figure 6 shows examples of bioprinted 3D constructs printed using any of the disclosed nozzles for coaxial extrusion with temperature management-based bioprinting.

### Detailed description

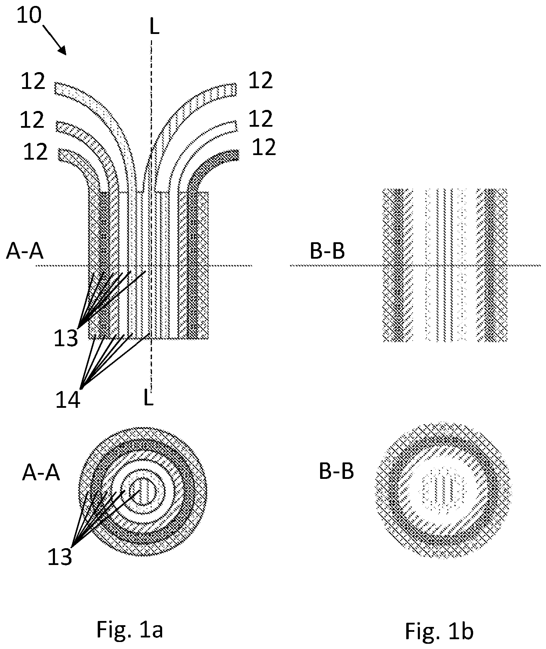

Figure 1a and 1b show schematics of a first aspect of a nozzle 10 for coaxial extrusion-based bioprinting. The illustrated nozzle may extrude a tubular construct of a total of six different materials simultaneously. In the top of Figure 1a a cross-sectional view of the nozzle along a longitudinal axis L is shown, and in the bottom of Figure 1a a cross-sectional view of the nozzle across the longitudinal axis L, along plane A-A of the top view, is shown. The central extrusion channel is surrounded coaxially by the second to sixth extrusion channels, each having an increased radius compared to the previous one.

As will become apparent below, the nozzle 10 comprises at least two or more modules, each with an inlet 12, an extrusion channel 13 and an outlet 14. A nozzle 10 may be provided with 2, 3, 4, 5, or 6 or more modules, depending on how many material layers are desired in the resulting bioprinted construct. The two or more modules are configured as separate parts adapted to be assembled together by a user prior to use, i.e. to jointly form a common unit being the nozzle. Thus, the interior lumen of the extrusion channels of the second and following modules will form a tubular shape around the core extrusion channel of the first module, when the modules are assembled to form a nozzle 10. Further, when the modules are assembled into the nozzle 10, the outlets 14 are preferably arranged essentially in the same plane across the longitudinal axis L, such that when material is extruded through the nozzle, the resulting printed or extruded construct will be a tubular structure with a central core and one or more coaxial tubular layers of material surrounding the central core. The assembled nozzle thus has individual inlets 12 for each extrusion channel, and preferably aligned outlets 14. The inlets 12 are adapted for influx or application of material to be extruded via the extrusion channels 13. The material to be extruded may be applied to the nozzle inlet by connection to a material container or reservoir of a suitable type.

An example of an extruded or printed construct from the nozzle of Figure 1a is shown in Figure 1b in corresponding views. Thus, in the top of Figure 1b a cross-sectional view of the extruded tubular construct along a longitudinal axis L is shown, and in the bottom of Figure 1b a cross-sectional view of the nozzle across a longitudinal axis, along plane B-B of the top view, is shown.

In particular, the nozzles described herein are thus adapted for assembly and disassembly by a user, e.g. just before initiating extrusion, and can thus be provided to the user as an unassembled set of modules. The user then choses the number of modules to assemble into a nozzle, depending on the number of tubular layers to be printed with a central core of extruded material. In a non-limiting example, if a structure with a central core and three layers of coaxial tubular material surrounding the core is to be extruded, the user may assemble four modules into a nozzle. In another non-limiting example, if a structure with a central core and five layers of coaxial tubular material surrounding the core is to be extruded, the user may assemble six modules into a nozzle.

In other non-limiting examples, during an extrusion process, the procedure may be briefly paused, and the nozzle reconfigured to include less or more modules, to adapt the number of material layers being extruded. The modules are easy to remove from the nozzle, e.g. from each other, and additional modules are easy to add to form a new nozzle configuration. For example, after printing a structure with a central core and three tubular layers of material surrounding the core for a certain period of time, the procedure may be paused and one further module added. When the extrusion is resumed the continued extrusion will produce a structure with a central core and four layers of material surrounding the core. Alternatively, modules may be removed correspondingly.

Thus, one advantage of the modules of the nozzle being adapted for assembly and disassembly by a user is being able to quickly and easily adapt to the number of material layers desired for a particular extrusion. In addition, the user is able to change the number of layers in a single extruded construct, either to a higher or a lower number, as an extrusion procedure of the tubular construct progresses. Another advantage of being adapted for assembly and disassembly by a user is being able to dismantle the nozzle for easy cleaning of the modules after use, which is essential when using biomaterials.

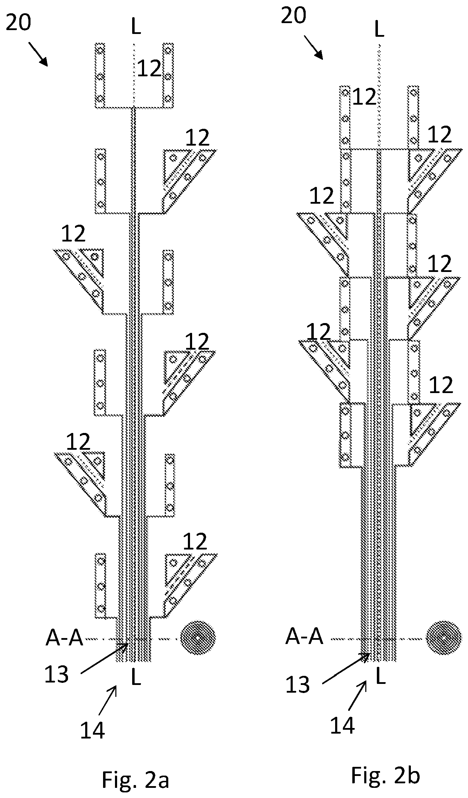

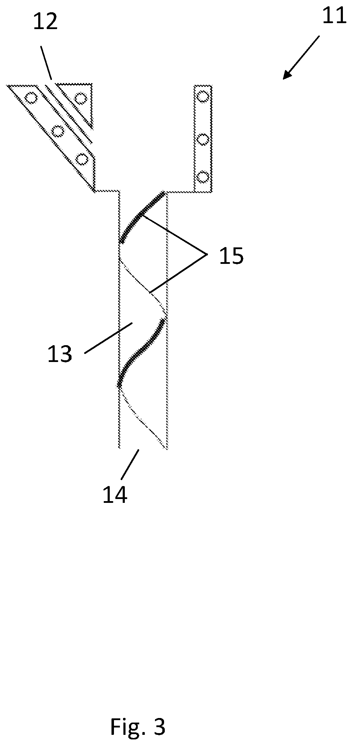

To further illustrate the versatility of the disclosed nozzles, another schematic of an exemplary nozzle 20 is illustrated in Figure 2a, in semi-assembled configuration, and in Figure 2b, in fully assembled configuration. In Figures 2a and 2b a cross-sectional view along the longitudinal axis L is shown. Similarly to the nozzle of Figure 1a, the nozzle 20 has six modules 11. Figure 3 illustrates a single module 11, as provided e.g. before assembly into a nozzle 20. As mentioned, the modules 11 are configured as separate parts adapted to be assembled together by a user to jointly form the nozzle 20, and the number of modules to be assembled may be chosen by the user. When assembled, a first module provides the inner core extrusion channel. When adding modules, each of the following modules 11 will have an individual extrusion channel 13 which provides a tubular channel around the previous module's extrusion channel and along the longitudinal axis L of the module 11. Thus, in the assembled nozzle all extrusion channels of the mounted modules will be essentially coaxially and concentrically aligned along the longitudinal axis L of the first module. Furthermore, the outlets 14 of each module are arranged coaxially for coaxial printing of single, double or multi-layered tubular structures.

The modules may preferably be assembled together using a centering attachment mechanism, such as using alignment members 15 to align each module 11 with a neighboring module 11. The centering attachment mechanism assures that the extrusion channels of the different modules in an assembled nozzle are always arranged essentially coaxially and concentrically aligned along the longitudinal axis L of the first module. Furthermore, the centering attachment mechanism may further ensure a specific distance between the extrusion channel of neighboring modules, such that a specific layer thickness is ensured during extrusion.

One example of a centering attachment mechanism is shown in Figure 3, where alignment members 15 are arranged as raised ridges positioned in a semi-spiral arrangement around at least part of the length of the outer surface of the extrusion channel of a module. However, other arrangements are feasible, as long as the alignment members help center and align each module in respect to neighboring module when the nozzle is assembled, such that when assembled, the extrusion channels 13 of the assembled modules are essentially coaxially and concentrically aligned along the same longitudinal axis L. Using alignment members makes it easy for a user to assemble and disassemble a desired number of modules for a particular situation. A centering attachment mechanism improves the centering and alignment between the modules when they are assembled into a nozzle.

Figures 2a and 2b illustrate that the inlet 12 can further be arranged to be staggered in the longitudinal direction, and optionally also with the inlets extending in different radial directions from the longitudinal axis L, which allows for easier access to each inlet, and the ability to arrange inlets in a suitable configuration depending on particular needs.

During use, the inlet of each module is connected to an individual material reservoir. This connection may be established either before assembly into a nozzle, and/or actively connected/disconnected when assembling/disassembling the nozzle. The connection of an inlet to a material container or reservoir will be further detailed and illustrated in coming sections.

Overall, the modular construction of a nozzle as disclosed herein makes assembly, disassembly and reassembly quick and easy to perform, making the nozzle extremely adaptable. The number of modules used in a nozzle can easily be altered, depending on a particular construct that one wants to print. For example, one may use two modules for a construct with only a core and one surrounding layer, or 3, 4, 5, 6 or more modules for multilayer structures. In one example, a nozzle comprises 4, 5 or 6 modules, which provides for a nozzle for printing a tubular construct with a central core and three tubular layer surrounding the core. Further, as mentioned, the user may pause an extrusion procedure to rearrange the number of modules, so that different numbers of layers may be extruded in different parts of a printed construct.

Furthermore, differently sized modules may be provided that fit together in different combinations. For instance, modules with extrusion channels of different diameters, adapted to fit together to form a nozzle, may be provided, such that the thickness of each extruded layer may be customized by the user assembling the modules into a nozzle. Thus, both the number of layers and the thickness of individual extruded layers may be varied as needed for a particular desired construct, by choosing specific modules to combine in a nozzle. As previously described, an extrusion procedure may be paused to exchange one, two or more modules to other modules providing different extrusion channel inner diameters, such that the continued extrusion provides a new thickness of one or more material layers.

As described earlier, another advantage of the modular construction is that it is easy to clean all parts of the nozzle, thus making it suitable for extrusion of materials such as biomaterials that require clean, preferably sterile, and controlled conditions. Cleaning in this sense includes any one of, or a combination of, manual or automated cleaning (e.g. with water and/or cleaning solutions), sterilizing and drying a module.

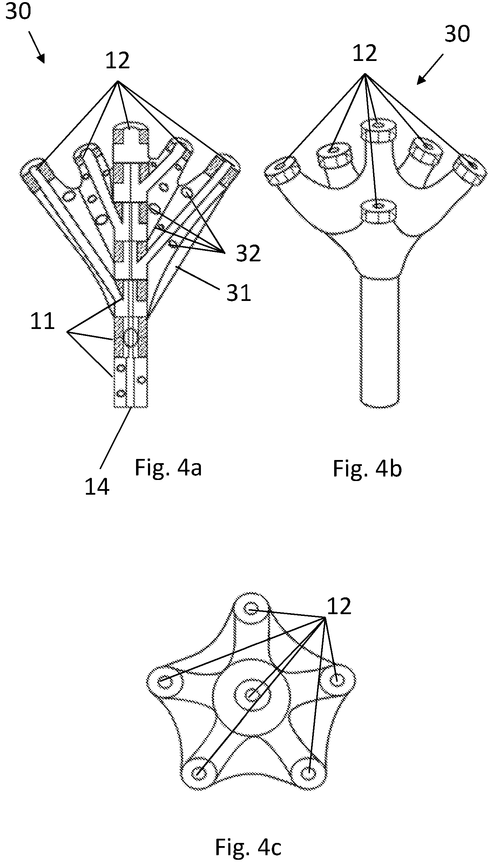

Bioprinting, and use of biomaterials, such as cell-containing material, require not just a clean environment, but often also a temperature-controlled environment. A further example of a nozzle is shown in Figures 4a, 4b and 4c. Figure 4a is a cross-sectional view, Figure 4b is a perspective view and Figure 4c is a top view of a nozzle 30. This nozzle 30 has all the features described above, e.g. separate modules 11, each having an inlet 12, an extrusion channel 13 and an outlet 14. When assembled into a nozzle, the modules are all centrally aligned along a common longitudinal axis such that the extrusion channels 13 are essentially coaxially and concentrically aligned. Moreover, when the modules are assembled together, the outlets 14 are preferably arranged essentially in the same plane across a longitudinal axis L of the nozzle.

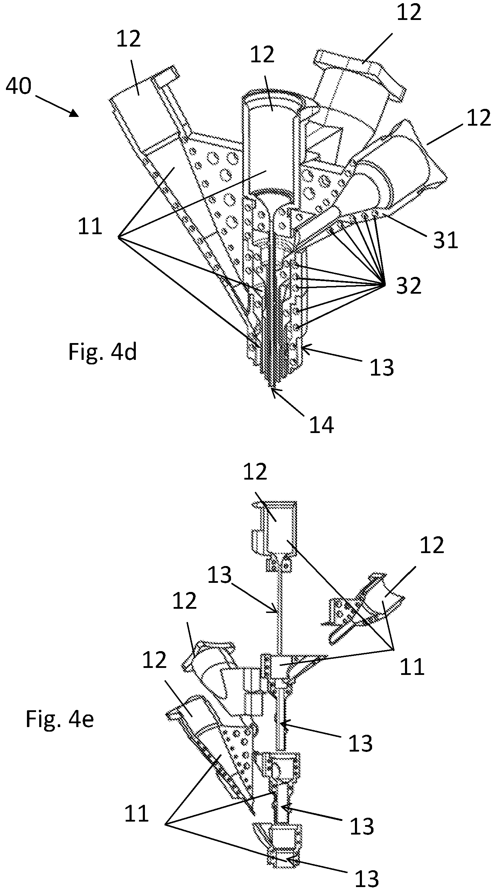

Another view of a nozzle 40 according to the present disclosure is illustrated in Figure 4d, showing a partly cut-through view of an assembled nozzle. The nozzle 40 has all the features described above, e.g. separate modules 11, each having an inlet 12, an extrusion channel 13 and an outlet 14. Not all modules in the nozzle are visible in the view of Figure 4d. When assembled into a nozzle, the modules are all centrally aligned along a common longitudinal axis such that the extrusion channels 13 are essentially coaxially and concentrically aligned. Moreover, when the modules are assembled together, the outlets 14 are preferably arranged essentially in the same plane across a longitudinal axis L of the nozzle. The details of arrangement of the extrusion channels 13 and outlets 14 is better seen in Figure 1a or 2a. The outlets 14 may optionally be slightly staggered in relation to each other.

Figure 4e illustrated an exploded view of the nozzle 40 of Figure 4d, i.e. the modules separated from each other, similar to how they could be provided to a user before assembly.

The nozzle of Figures 4a, 4b, 4c and 4d is shown in an assembled state. However as in previous aspects, the modules 11 may be provided to a user as separate modules, e.g. in a kit of modules 11, such that the user may assembled the desired number of modules for a specific printing procedure. An example of the nozzle in separate parts is seen in Figure 4e. Furthermore, the modules may be provided as two or several modules intended for various layers, and depending on the chosen combination, will then provide various alternatives to extruded layer thickness in the assembled nozzle. The modules are adapted such that a ready-to-use nozzle may be obtained with either two modules, or three, four, five, six or more nozzles.

Each module 11 of the nozzle 30 further preferably has an insulating enclosure 31 adapted to insulate said material to be extruded via the extrusion channel(s) (13) from external or internal temperature changes. Two examples showing the insulating enclosure 31 are seen in Figures 4a and 4d. The insulating enclosure 31 is adapted to at least insulate the material to be extruded or being extruded, i.e. any such material present in the nozzle, when the nozzle is assembled, or, in other words, when at least two or more modules 11 are assembled into a common nozzle. Preferably, the insulating enclosure 31 is adapted to essentially fully insulate any extrusion material in at least the extrusions channel of any individual module, and in some aspects, even when the module is not assembled into a nozzle.

An insulating enclosure 31 of a nozzle is preferably adapted to insulate at least the extrusion channel 13 of the respective module 11 from external or internal temperature changes, and is preferably adapted to also insulate at least part of the extrusion channel(s) of any other modules in the same nozzle, when the modules are assembled.

In further aspects, an enclosure 31 of a nozzle is preferably adapted to insulate the inlet 12 of the respective module 11 from external or internal temperature changes. In some aspects, the enclosure 31 is adapted to insulate also the extrusion channel of the respective module, as described above, at least when the module is assembled into a nozzle with at least one further module. Enclosures 31 of a modules forming a nozzle may also be adapted such that all extrusion channels of a nozzle are insulated when two or more modules are assembled into a nozzle.

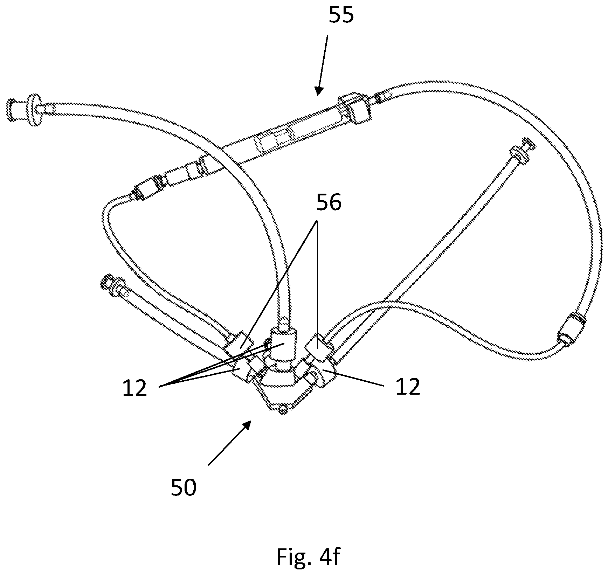

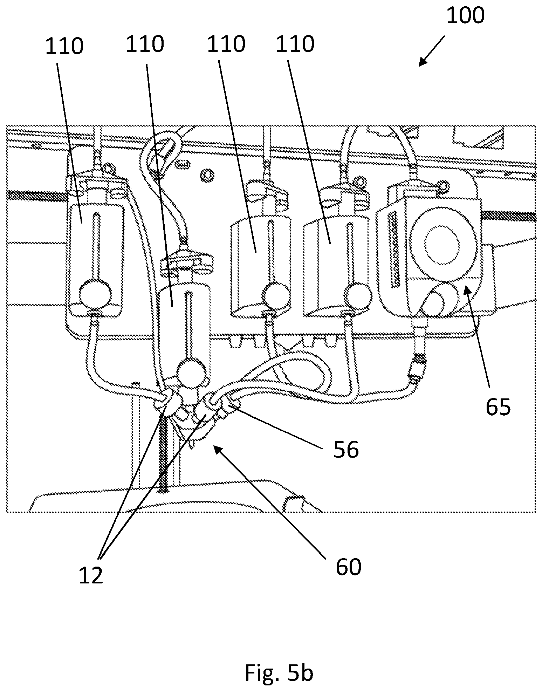

An enclosure 31 may be configured in a number of manners, such as any suitable temperature insulating material, which will protect the material within the module from the surrounding environmental temperature. Two examples of an enclosure 31 adapted to insulate at least each inlet 12 are shown in Figures 4a and 4d, comprising a system of channels 32 arranged within an insulating material or enclosure 31, wherein the channels are adapted to contain a fluid for controlling the temperature of the inlet. The channels may be connected to an arrangement for generating flow of the fluid through the channels. Two such examples are illustrated in Figures 4f and 5b.

Figure 4f shows a perspective view of an assembled nozzle 50, similar to the nozzles described above. The inlets of each module are provided with an attachment port and tubing, each ready to be connected to a material reservoir. Furthermore, a temperature regulation member 55 may be connected via tubing to an inlet port 56 to the nozzle and an outlet port 56 from the nozzle, such that a suitable temperature regulation fluid may be circulated through a system of channels 32 arranged within an insulating material or enclosure 31. The temperature regulation member 55 may comprise a pump and optionally a power supply for powering the pump.

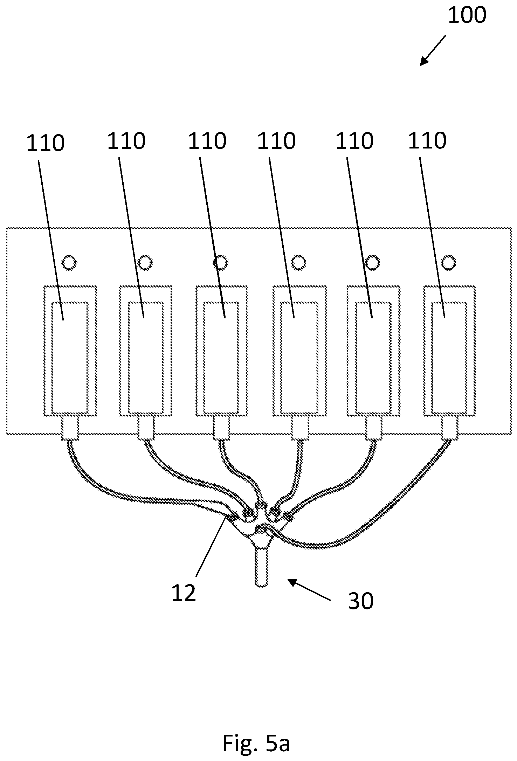

In another example, shown in Figure 5b, a temperature regulation member 65 may also be a temperature regulation toolhead 65 for a bioprinter, wherein the power is supplied via the bioprinter itself. The nozzle 60 illustrated here is similar to previous nozzles disclosed herein. The temperature regulation toolhead 65 may comprise a pump and is preferably connected via an inlet/outlet 56 arrangement using tubing. The temperature regulation toolhead 65 circulates a suitable fluid for controlling the temperature through a system of channels 32 arranged within an insulating enclosure of the nozzle 60 as described earlier. Such a system may further comprise a controller adapted to control the temperature of the material to be extruded by controlling the fluid circulating through the system of channels 32.

Thus, by controlling the temperature of the fluid circulating through the system of channels 32, the extrusion material within the modules of the nozzle may be cooled, heated or maintained at a specified temperature. This is especially important when extruding biomaterials, such as materials with living cells included, to ensure the viability of the material throughout the extrusion process.

As mentioned, the enclosure 31 may be arranged to insulate the extrusion channel 13 and/or the inlet 12 of at least the respective module 11, such that the temperature of all material passing through the inlet 12 and extrusion channel 13 may be controlled. Using a fluid arranged in channels, or other similar controllable insulation arrangement, allows for both cooling and heating of the material within the module. In some aspects, an enclosure 31 of a nozzle could be configured for individual temperature control of each inlet or module, thus making it possible to provide different temperatures for different materials used in the nozzle 30. An examples of such individual temperature control would be to connect individual arrangements for generating flow of cooling or heating fluid through the above described channels for different modules, such that each module may be provided with an optimal temperature for a chosen extrusion material.

Being able to provide a nozzle adapted for the specific requirements of both a clean/sterile environment and that of a temperature controlled environment makes a nozzle 30 particularly suitable for bioprinting, e.g. ensuring high viability of living cells in a final construct.

Further the herein disclosed nozzles provide a more compact design, even with built in temperature regulation, and thus allow for less bulkiness than other nozzles. This makes the nozzle easier to connect and use in e.g. bioprinters.

Figure 5a illustrates how a nozzle 10, 20, 30, 40, 50, 60 as disclosed herein may be attached to the separate printheads or toolhead 110 of a bioprinter 100, such that each material compartment of a printhead 110 is connected to a unique inlet 12 of the nozzle 30 via dedicated tubing.

As an alternative, illustrated in Figure 5b, a nozzle 10, 20, 30, 40, 50, 60 as disclosed herein may be mounted directly at one of the toolheads 110 of a bioprinter 100, e.g. the toolhead containing the material for the core of the desired construct, and the inlet 12 for the core module 11 is connected directly to the material container of this toolhead. The remaining inlets 12 could then be connected by tubing to the other toolheads 110. It is also conceivable to connect the nozzle only to a single toolhead. In such a case, preferably the toolhead has at least two different material compartments that can be connected to an inlet of a module in the nozzle. As described above, a temperature regulation member 65, e.g. a temperature regulation toolhead 65 for a bioprinter, circulates a suitable fluid for controlling the temperature through a system of channels 32 in the insulating enclosure 31 of the nozzle.

A method of bioprinting a coaxial tubular construct using the disclosed nozzle comprises the steps of assembling 2, 3, 4, 5, 6 or more modules as described above to form the nozzle, connecting at least two module inlets of the nozzle to individual compartments in e.g. printer toolheads, the compartments containing material to be used in the final construct, arranging the outlet of the connected nozzle above a printbed, and printing a tubular construct by extruding material through the nozzle.

As mentioned, using the disclosed nozzle allows for printing of multi-layered tubular structures. Such constructs may be useful in a variety of applications. For example, the layers may be of different material or of the same materials in different concentrations or ratios, to create a gradient and/or layered structure. In other aspects, the multi-layered configuration allows for printing of alternating patterns of material.

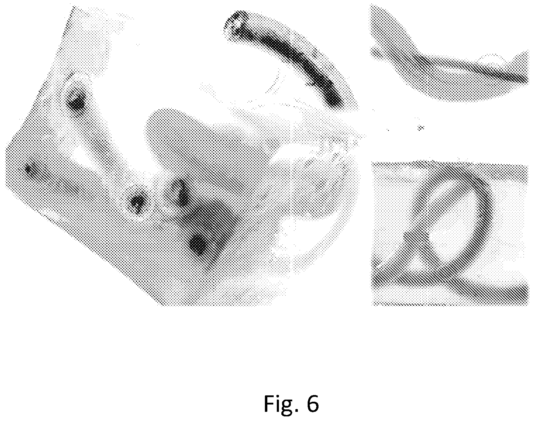

Often a sacrificial ink is used for the central core, such that this may be removed after printing, to obtain perfusable cannular structures. Some examples of printed tubular structures and microfluidic constructs made from biomaterials and cells are shown in Figure 6. This illustrates that it is possible to print complex cylindrical tissues for e.g. transplant, for example tissues such as veins, vessel or arteries composed of many different cells and layers. For research purposes it could be useful to print other complex tissues such as hair or muscle fibers.

In another aspect, a nozzle assembly is disclosed, comprising any of the above described nozzles, and further comprising a pressure regulation configuration. For example, extrusion pressure can be regulated by connecting pressure regulator(s) via appropriate valves and tubing to one or more of the module inlets. Such a system may comprise a controller adapted to control extrusion through the nozzle by operating the pressure regulator. Thus, the extrusion pressure may be varied in each individual extrusion channel to adapt to varying types of material and/or dimensions printed. As detailed below, experiments have shown that the present nozzle is specifically adapted for the specific needs of biomaterial and bioprinting. A significant improvement in pressure profiles and temperature dynamic management compared to commercial coaxial nozzles currently available on the market has been demonstrated and measured.

The presently disclosed nozzle may be used in the FRESH (Freeform Reversible Embedding of Suspended Hydrogels) printing method. FRESH is a 3D bioprinting method designed to address the many limitations faced when using soft biomaterials for tissue engineering applications.

Tip extensors may be attached to the presently disclosed nozzle to deposit materials into a vat of materials as it is used for suspended printing. Using the disclosed nozzle allows for easy use of several materials for printing tubular structures even when using softer materials.

The presently disclosed nozzle may be integrated with a material selector mixer system to dispense materials in gradients, ratios, or a fast switching patterns.

The presently disclosed nozzle may be integrated to a high voltage tuning system to be use for cell electro writing. Using the disclosed nozzle allows for easy use of several materials for printing tubular structures.

In examples, multi-layered vessel-like structures have been produced by employing coaxial bioprinting with a nozzle according to the present disclosure. The materials used include living cells and printable hydrogel biomaterials. The native architecture of large- and middle-diameter vessels was mimicked by fabricating double-layered vessel-like structures and perfusable channels via direct 3D bioprinting and embedded 3D printing. A known bioprinter was customized to include four complete functional printheads with a coaxial nozzle as disclosed herein, primarily using four modules in the nozzle. The printheads are essentially toolheads being material cartridges for a bioprinter, and each material cartridge was connected to a separate module inlet. The configuration was similar to that shown in Figure 5, except that only four channels/modules were used. Several different coaxial nozzles with different diameters of the four extrusion channels were used, and in each particular combination of modules the dimensions were adapted to fit together and to produce specific thicknesses of the different layers in a desired construct. The inner diameter of the extrusion channels of the smallest (inner) channel was between 0,30 mm and 0,84 mm, while the inner diameter of the extrusion channels of the largest (outer) channel was between 3,00 mm and 3,55 mm in the different combinations.

A sacrificial ink, CELLINK PLURONICS, was used for the inner (core) channel, and human foreskin fibroblasts HFF-1 (ATCC^{®} SRCR-1041^{™}) and human primary umbilical vein endothelial cells (HUVECs) (ATCC^{®} PCS-100-010) were used in some of the subsequent layers in bioprinting experiments. A cross-linking agent was used in the outermost layer to crosslink the vessels constructs right after the extrusion. In some cases, the vessel-like constructs where printed as embedded in a supporting hydrogel. As observed from microscopy images, results showed successful fabrication of double-layered vessel-like constructs. Furthermore, it was demonstrated that extrusion pressure is a critical printing parameter for cell viability on these multi-layered tissue constructs fabricated with the aid of coaxial extrusion systems. The bioprinting procedure was performed with the four designed coaxial extrusion systems, and while varying the extrusion pressure of the printheads for the channels containing living cells, using individual pressure regulators that allowed the control of pressurized air from an external pressure compressor to individual inlets of the modules of the nozzle. Results showed that increasing extrusion pressure more than 20% over standard extrusion pressure has a significant negative effect on cell viability. However, no significant effect on cell viability was seen when varying the layer area and thickness of the different channels. Thus, inlet pressure must be carefully set to optimal values in order to preserve cell viability.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A nozzle (10, 20, 30, 40, 50, 60) for coaxial extrusion, comprising
at least two or more modules (11) for coaxial extrusion, each of said modules (11) comprising an inlet (12), an extrusion channel (13) and an outlet (14), said inlet (12) adapted for influx or application of material to be extruded via the extrusion channel (13), and said extrusion channel (13) connecting said inlet (13) and said outlet (14),
wherein in a first module of said two or more modules (11), the extrusion channel (13) is centrally arranged along a longitudinal axis (L) of the module (11),
wherein in the following module(s) the extrusion channel (13) is a tubular channel adapted to be arranged around the first module's extrusion channel (13) along the longitudinal axis (L) of the first module,
wherein said first and following module(s) are adapted to be mounted together such that the extrusion channels (13) are essentially coaxially and concentrically aligned along the longitudinal axis (L) of the first module and the outlets (14) of each module are arranged coaxially for coaxial printing of single, double or multi-layered tubular structures when the modules (11) are connected,
**characterized in that** the two or more modules are configured as separate parts adapted to be assembled together by a user to jointly form the nozzle (10, 20, 30, 40, 50, 60),
wherein the two or more modules (11) are further adapted to be disassembled from each other by the user and optionally reassembled with the same or different number of said modules (11).

2. A nozzle (10, 20, 30, 40, 50, 60) according to any preceding claim, wherein said two or more modules (11) are adapted to be assembled together using a centering attachment mechanism.

3. A nozzle (10, 20, 30, 40, 50, 60) according to claim 3, wherein said centering attachment mechanism comprises alignment members (15).

4. A nozzle (10, 20, 30, 40, 50, 60) according to any preceding claim, wherein the number of the at least two or more modules (11) for coaxial extrusion are 2, 3, 4, 5, or 6 or more modules.

5. A nozzle (10, 20, 30, 40, 50, 60) according to any preceding claim, further comprising at least one insulating enclosure (31) arranged to insulate said material to be extruded via the extrusion channel(s) (13) from external or internal temperature changes.

6. A nozzle (10, 20, 30, 40, 50, 60) according to claim 5 wherein said insulating enclosure (31) is adapted to insulate at least said extrusion channel (13) of the respective module (11) from external or internal temperature changes.

7. A nozzle (10, 20, 30, 40, 50, 60) according to claim 5 or 6, wherein said insulating enclosure (31) is adapted to insulate the inlet (12) of a respective module (11) from external or internal temperature changes.

8. A nozzle (10, 20, 30, 40, 50, 60) according to any of claims 5 to 7, wherein said enclosure (31) of a nozzle is configured for individual temperature control of each respective module.

9. A nozzle (10, 20, 30, 40, 50, 60) according to any of claim 5 to 8, wherein said enclosure (31) comprises a system of channels (32) arranged to contain a fluid for controlling the temperature of said inlet (12) and/or the extrusion channel (13) of at least the respective module (11).

10. Nozzle assembly for bioprinting, comprising a nozzle according to any of claims 1 to 9 further comprising a temperature regulation member (55, 65) arranged to circulate a fluid through the system of channels (32) such that the temperature of the material to be extruded is controlled.

11. A nozzle assembly according to claim 10, wherein the temperature regulation member (65) is a temperature regulating toolhead for a bioprinter.

12. Nozzle assembly for bioprinting, comprising a nozzle according to any of claims 1 to 9, or a nozzle assembly according to claim 10 or 11, further comprising at least one pressure regulator arranged to vary the extrusion pressure in at least one of the modules.

13. A system for coaxial extrusion, comprising a nozzle assembly according to claim 10 or 11, further comprising a controller adapted to control the temperature of the material to be extruded by controlling the fluid circulating through the system of channels (32).

14. A system for coaxial extrusion, comprising a nozzle assembly according to claim 12, further comprising a controller adapted to control extrusion through said nozzle by operating said at least one pressure regulator.

15. A system according to claim 13 or 14, further comprising two or more toolheads, said toolheads being material cartridges for a bioprinter and each material cartridge being adapted to be connected to a separate module inlet of the nozzle.

16. Method of bioprinting a coaxial tubular construct, comprising the steps of
providing a nozzle according to any of claims 1 to 9 or a nozzle assembly according to any of claims 10 to 12;
assembling 2, 3, 4, 5, 6 or more modules to form the nozzle;
connecting at least two module inlets of the nozzle to individual compartments containing material to be used in the printed construct;
arranging the outlet of the connected nozzle above a printbed; and
printing a tubular construct by extruding material through the nozzle.

## Patentansprüche

1. Düse (10, 20, 30, 40, 50, 60) für koaxiales Strangpressen, umfassend
mindestens zwei oder mehr Module (11) für koaxiales Strangpressen, wobei jedes der Module (11) einen Einlass (12), einen Strangpresskanal (13) und einen Auslass (14) umfasst, wobei der Einlass (12) für eine Zufuhr oder ein Auftragen von strangzupressendem Material über den Strangpresskanal (13) ausgelegt ist und der Strangpresskanal (13) den Einlass (13) und den Auslass (14) verbindet,
wobei in einem ersten Modul der zwei oder mehr Module (11) der Strangpresskanal (13) mittig entlang einer Längsachse (L) des Moduls (11) angeordnet ist,
wobei es sich in dem (den) folgenden Modul(en) bei dem Strangpresskanal (13) um einen rohrförmigen Kanal handelt, der dazu ausgelegt ist, um den Strangpresskanal (13) des ersten Moduls entlang der Längsachse (L) des ersten Moduls angeordnet zu sein,
wobei das erste und das (die) folgende(n) Modul(e) dazu ausgelegt sind, so zusammen montiert zu werden, dass die Strangpresskanäle (13) im Wesentlichen koaxial und konzentrisch entlang der Längsachse (L) des ersten Moduls ausgerichtet sind und die Auslässe (14) jedes Moduls koaxial zum koaxialen Drucken von ein-, zwei- oder mehrschichtigen rohrförmigen Strukturen angeordnet sind, wenn die Module (11) verbunden sind,
**dadurch gekennzeichnet,**
**dass** die zwei oder mehr Module als separate Teile konfiguriert sind, die dazu ausgelegt sind, durch einen Benutzer zusammengebaut zu werden, um gemeinsam die Düse (10, 20, 30, 40, 50, 60) zu bilden,
wobei die zwei oder mehr Module (11) ferner dazu ausgelegt sind, voneinander durch den Benutzer auseinandergebaut zu werden und gegebenenfalls mit derselben oder einer unterschiedlichen Anzahl der Module (11) wieder zusammengebaut zu werden.

2. Düse (10, 20, 30, 40, 50, 60) nach einem der vorhergehenden Ansprüche, wobei die zwei oder mehr Module (11) dazu ausgelegt sind, unter Verwendung eines Zentrierbefestigungsmechanismus zusammengebaut zu werden.

3. Düse (10, 20, 30, 40, 50, 60) nach Anspruch 3, wobei der Zentrierbefestigungsmechanismus Ausrichtungselemente (15) umfasst.

4. Düse (10, 20, 30, 40, 50, 60) nach einem der vorhergehenden Ansprüche, wobei die Anzahl der mindestens zwei oder mehr Module (11) für koaxiales Strangpressen 2, 3, 4, 5, oder 6 oder mehr Module beträgt.

5. Düse (10, 20, 30, 40, 50, 60) nach einem der vorhergehenden Ansprüche, ferner umfassend mindestens ein isolierendes Gehäuse (31), das dazu angeordnet ist, das über den (die) Strangpresskanal (Strangpresskanäle) (13) strangzupressende Material vor externen oder internen Temperaturänderungen zu isolieren.

6. Düse (10, 20, 30, 40, 50, 60) nach Anspruch 5, wobei das isolierende Gehäuse (31) dazu ausgelegt ist, zumindest den Strangpresskanal (13) des jeweiligen Moduls (11) vor externen oder internen Temperaturänderungen zu isolieren.

7. Düse (10, 20, 30, 40, 50, 60) nach Anspruch 5 oder 6, wobei das isolierende Gehäuse (31) dazu ausgelegt ist, den Einlass (12) eines jeweiligen Moduls (11) vor externen oder internen Temperaturänderungen zu isolieren.

8. Düse (10, 20, 30, 40, 50, 60) nach einem der Ansprüche 5 bis 7, wobei das Gehäuse (31) einer Düse für die individuelle Temperaturregelung jedes jeweiligen Moduls konfiguriert ist.

9. Düse (10, 20, 30, 40, 50, 60) nach einem der Ansprüche 5 bis 8, wobei das Gehäuse (31) ein System von Kanälen (32), das dazu angeordnet ist, ein Fluid zum Regeln der Temperatur des Einlasses (12) und/oder des Strangpresskanals (13) von zumindest dem jeweiligen Modul (11) zu beinhalten, umfasst.

10. Düsenbaugruppe zum Biodrucken, umfassend eine Düse nach einem der Ansprüche 1 bis 9, ferner umfassend ein Temperaturregulierelement (55, 65), das dazu angeordnet ist, ein Fluid durch das System von Kanälen (32) so zirkulieren zu lassen, dass die Temperatur des strangzupressenden Materials geregelt wird.

11. Düsenbaugruppe nach Anspruch 10, wobei es sich bei dem Temperaturregulierelement (65) um einen temperaturregulierenden Werkzeugkopf für einen Biodrucker handelt.

12. Düsenbaugruppe zum Biodrucken, umfassend eine Düse nach einem der Ansprüche 1 bis 9, oder eine Düsenbaugruppe nach Anspruch 10 oder 11, ferner umfassend mindestens einen Druckregulierer, der dazu angeordnet ist, den Strangpressdruck in mindestens einem der Module zu variieren.

13. System für koaxiales Strangpressen, umfassend eine Düsenbaugruppe nach Anspruch 10 oder 11, ferner umfassend einen Regler, der dazu ausgelegt ist, die Temperatur des strangzupressenden Materials durch Regeln des Fluids, das durch das System von Kanälen (32) zirkuliert, zu regeln.

14. System für koaxiales Strangpressen, umfassend eine Düsenbaugruppe nach Anspruch 12, ferner umfassend einen Regler, der dazu ausgelegt ist, das Strangpressen durch die Düse durch Betätigen des mindestens einen Druckregulierers zu regeln.

15. System nach Anspruch 13 oder 14, ferner umfassend zwei oder mehr Werkzeugköpfe, wobei es sich bei den Werkzeugköpfen um Materialkartuschen für einen Biodrucker handelt und jede Materialkartusche dazu ausgelegt ist, mit einem separaten Moduleinlass der Düse verbunden zu sein.

16. Verfahren zum Biodrucken eines koaxialen rohrförmigen Konstrukts, umfassend die Schritte von Bereitstellen einer Düse nach einem der Ansprüche 1 bis 9 oder einer Düsenbaugruppe nach einem der Ansprüche 10 bis 12;
Zusammenbauen von 2, 3, 4, 5, 6 oder mehr Modulen, um die Düse zu bilden;
Verbinden von mindestens zwei Moduleinlässen der Düse mit einzelnen Kammern, die Material beinhalten, das in dem gedruckten Konstrukt zu verwenden ist;
Anordnen des Auslasses der verbundenen Düse über einem Druckbett; und
Drucken eines rohrförmigen Konstrukts durch das Strangpressen von Material durch die Düse.

## Revendications

1. Buse (10, 20, 30, 40, 50, 60) pour extrusion coaxiale, comprenant
au moins deux ou plusieurs modules (11) pour extrusion coaxiale, chacun desdits modules (11) comprenant une entrée (12), un canal d'extrusion (13) et une sortie (14), ladite entrée (12) étant adaptée pour l'apport ou l'application de matériau à extruder via le canal d'extrusion (13), et ledit canal d'extrusion (13) reliant ladite entrée (13) et ladite sortie (14),
dans laquelle, dans un premier module desdits deux ou plusieurs modules (11), le canal d'extrusion (13) est agencé de manière centrale le long d'un axe longitudinal (L) du module (11),
dans laquelle, dans l'un ou plusieurs modules suivants, le canal d'extrusion (13) est un canal tubulaire adapté pour être agencé autour du canal d'extrusion (13) du premier module le long de l'axe longitudinal (L) du premier module,
dans laquelle lesdits premier et l'un ou plusieurs modules suivants sont adaptés pour être montés ensemble de telle sorte que les canaux d'extrusion (13) soient alignés de manière sensiblement coaxiale et concentrique le long de l'axe longitudinal (L) du premier module et que les sorties (14) de chaque module soient agencées de manière coaxiale pour une impression coaxiale de structures tubulaires à couche unique, double ou multiple lorsque les modules (11) sont connectés,
**caractérisée en ce que**
les deux ou plusieurs modules sont configurés comme des pièces séparées adaptées pour être assemblées ensemble par un utilisateur pour former conjointement la buse (10, 20, 30, 40, 50, 60),
dans laquelle les deux ou plusieurs modules (11) sont en outre adaptés pour être désassemblés les uns des autres par l'utilisateur et éventuellement réassemblés avec un nombre identique ou différent desdits modules (11).

2. Buse (10, 20, 30, 40, 50, 60) selon l'une quelconque des revendications précédentes, dans laquelle lesdits deux ou plusieurs modules (11) sont adaptés pour être assemblés ensemble en utilisant un mécanisme de fixation par centrage.

3. Buse (10, 20, 30, 40, 50, 60) selon la revendication 3, dans laquelle ledit mécanisme de fixation par centrage comprend des éléments d'alignement (15).

4. Buse (10, 20, 30, 40, 50, 60) selon l'une quelconque des revendications précédentes, dans laquelle le nombre de l'au moins deux ou plusieurs modules (11) pour extrusion coaxiale est de 2, 3, 4, 5, ou 6 modules ou plus.

5. Buse (10, 20, 30, 40, 50, 60) selon l'une quelconque des revendications précédentes, comprenant en outre au moins une enceinte isolante (31) agencée pour isoler ledit matériau à extruder via l'un ou plusieurs canaux d'extrusion (13) des changements de température externes ou internes.

6. Buse (10, 20, 30, 40, 50, 60) selon la revendication 5, dans laquelle ladite enceinte isolante (31) est adaptée pour isoler au moins ledit canal d'extrusion (13) du module (11) respectif des changements de température externes ou internes.

7. Buse (10, 20, 30, 40, 50, 60) selon la revendication 5 ou 6, dans laquelle ladite enceinte isolante (31) est adaptée pour isoler l'entrée (12) d'un module (11) respectif des changements de température externes ou internes.

8. Buse (10, 20, 30, 40, 50, 60) selon l'une quelconque des revendications 5 à 7, dans laquelle ladite enceinte (31) d'une buse est configurée pour une régulation individuelle de la température de chaque module respectif.

9. Buse (10, 20, 30, 40, 50, 60) selon l'une quelconque des revendications 5 à 8, dans laquelle ladite enceinte (31) comprend un système de canaux (32) agencés pour contenir un fluide pour réguler la température de ladite entrée (12) et/ou du canal d'extrusion (13) d'au moins le module (11) respectif.

10. Ensemble de buse pour bio-impression, comprenant une buse selon l'une quelconque des revendications 1 à 9 comprenant en outre un élément de régulation de température (55, 65) agencé pour faire circuler un fluide à travers le système de canaux (32) de telle sorte que la température du matériau à extruder soit régulée.

11. Ensemble de buse selon la revendication 10, dans lequel l'élément de régulation de température (65) est une tête d'outil de régulation de température pour une bio-imprimante.

12. Ensemble de buse pour bio-impression, comprenant une buse selon l'une quelconque des revendications 1 à 9, ou un ensemble de buse selon la revendication 10 ou 11, comprenant en outre au moins un régulateur de pression agencé pour faire varier la pression d'extrusion dans au moins l'un des modules.

13. Système pour extrusion coaxiale, comprenant un ensemble de buse selon la revendication 10 ou 11, comprenant en outre un dispositif de commande adapté pour réguler la température du matériau à extruder en commandant le fluide circulant à travers le système de canaux (32).

14. Système pour extrusion coaxiale, comprenant un ensemble de buse selon la revendication 12, comprenant en outre un dispositif de commande adapté pour commander l'extrusion à travers ladite buse en actionnant ledit au moins un régulateur de pression.

15. Système selon la revendication 13 ou 14, comprenant en outre deux ou plusieurs têtes d'outils, lesdites têtes d'outils étant des cartouches de matériau pour une bio-imprimante et chaque cartouche de matériau étant adaptée pour être connectée à une entrée de module séparée de la buse.

16. Procédé de bio-impression d'une construction tubulaire coaxiale, comprenant les étapes consistant à fournir une buse selon l'une quelconque des revendications 1 à 9 ou un ensemble de buse selon l'une quelconque des revendications 10 à 12 ;
assembler 2, 3, 4, 5, 6 modules ou plus pour former la buse ;
connecter au moins deux entrées de module de la buse à des compartiments individuels contenant le matériau à utiliser dans la construction imprimée ;
agencer la sortie de la buse connectée au-dessus d'un plateau d'impression ; et
imprimer une construction tubulaire en extrudant le matériau à travers la buse.
